# FASCICULE DE BREVET EUROPEEN

(11) **EP 0 673 887 B1**
(45) Date de publication et mention de la délivrance du brevet: **10.05.2000**
(21) Numéro de dépôt: 95400563.3
(22) Date de dépôt: 15.03.1995
(51) Int. Cl.: C03B 5/14, C03B 5/00, B09B 3/00

(54) **Procédé de vitrification de produits sous forme de morceaux ou particules solides**
Verfahren zum Verglasen von Produkten in Stücken oder feste Teile
Method for vitrification of pieces or solid particles

(30) Priorité: 23.03.1994 FR 9403398
(43) Date de publication de la demande: 27.09.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR); SOGEMI - SOCIETA GENERALE MACCHINE IMPIANTI, 20151 Milano (IT)
(72) Inventeur: Duchateau, Eric, F-78000 Versailles (FR); Kloers, Eberhard, F-92000 Boulogne-Billancourt (FR); Vigorelli, Angelo, I-20151 Milan (IT)
(74) Mandataire: Vesin, Jacques

(56) Documents cités:
- GB-A- 2 014 127
- US-A- 5 005 493

## Description

La présente invention est relative à un procédé de vitrification de produits sous forme de morceaux ou particules solides.

Un grand nombre d'activités industrielles aboutissent à la formation de déchets solides contenant des teneurs parfois importantes de métaux lourds, par exemple le chrome, le nickel, le zinc, le mercure, le plomb, le cadmium, qui sont considérés comme très toxiques. Ces déchets ne peuvent pas, en général, être mis en décharge car ils peuvent entraîner une contamination des nappes phréatiques.

Le cas se présente en particulier avec les poussières provenant de l'incinération des ordures ménagères.

Une séparation physico-chimique de métaux lourds, avec récupération de ceux-ci par filtration ou décantation, est coûteuse.

Une autre technique consiste en une vitrification, c'est-à-dire un piégeage des métaux dangereux dans un verre insoluble, obtenue par fusion des déchets solides additionnés le cas échéant de verre et/ou de fondant. La fusion peut être réalisée au four électrique, à arc, à torche à plasma, à électrodes immergées, etc.. Elle peut également être réalisée dans un four équipé de brûleurs, notamment au gaz.

Lors du chauffage des produits à vitrifier jusqu'à la fusion, il se produit un dégagement de fumées, c'est-à-dire de gaz provenant de substances contenues dans les produits à vitrifier et qui ont été libérés ou sont passés à l'état gazeux sous l'effet de l'élévation de la température. Au début de l'opération, ces gaz, qui sont en forte turbulence, entraînent des particules de produit à vitrifier qui n'ont pas été enrobées dans la masse vitreuse à former ou en formation.

Il est donc nécessaire de faire subir à ces gaz un traitement destiné à réduire la pollution qu'ils peuvent causer, et ce traitement augmente de prix et de complication à mesure que les exigences en matière de pollution deviennent plus sévères.

La technique utilisant des brûleurs est moins coûteuse en investissements et consommation d'énergie électrique que les autres, mais le brûleur, quand il est en action, produit des gaz qui sont en quantité plus importante que ceux qui proviennent des produits à vitrifier, et augmentent donc l'importance du problème de pollution et la nécessité de réduire cette pollution.

La présente invention a pour but de fournir un procédé de vitrification de substance solides qui réduise les émissions de fumées à une valeur telle qu'un traitement très simplifié soit seul nécessaire, ou même qu'on puisse se passer de traitement des fumées, et qui, en même temps, soit d'un prix de revient peu élevé.

Pour obtenir ce résultat, l'invention fournit un procédé de vitrification de produits sous forme de morceaux ou particules solides, selon lequel on utilise un four équipé d'un moyen de chauffage, on introduit dans le four les produits à vitrifier, on laisse les produits s'échauffer dans le four jusqu'à formation d'une masse vitreuse liquide ou pâteuse, puis on évacue cette masse vitreuse hors du four et on la laisse refroidir jusqu'à solidification, procédé selon lequel on préchauffe les parois intérieures des fours à l'aide du moyen de chauffage jusqu'à une température dépassant la température où les produits à vitrifier peuvent former une masse vitreuse liquide ou pâteuse, on réduit substantiellement l'énergie fournie par le moyen de chauffage avant d'introduire les déchets dans le four, et on laisse le produit s'échauffer uniquement en recevant de la chaleur transmise par les parois internes du four jusqu'à ce que l'ensemble du produit soit sous forme de masse liquide ou pâteuse, le moyen de chauffage étant maintenu à puissance réduite au moins jusqu'à ce moment.

La réduction de puissance du moyen de chauffage peut consister en un arrêt complet de celui-ci. Cependant, le rallumage ultérieur d'un moyen de chauffage se traduit souvent par une montée très brusque de la pression à l'intérieur du four, ce qui n'est pas souhaitable. On préfère, par conséquent, abaisser seulement la puissance du moyen de chauffage à une valeur de ralenti, qui peut être, par exemple, inférieure à 30% de la puissance maximale.

La température maximale qui peut atteindre la surface intérieure de la paroi interne du four est fonction de la nature de cette paroi et de celle du produit à traiter. Au-delà de cette température, la paroi risque de se dégrader physiquement ou réagir chimiquement avec le produit à traiter. La quantité de chaleur qui sera transmise au produit par la paroi du four dépend, en particulier, de la température moyenne atteinte dans l'épaisseur de la paroi, ainsi que de l'épaisseur et des propriétés thermiques de cette paroi. On comprend que le préchauffage des parois intérieures du four est une opération qui doit être optimisée avec précision dans chaque cas.

Suivant un mode opératoire avantageux, on règle la puissance du moyen de chauffage pour que la surface interne de la paroi du four ne dépasse pas une température limite le paroi dépendant notamment de la composition chimique de ladite paroi et du produit.

De cette façon, on limite l'amplitude des cycles thermiques subis par la paroi de four, et on réduit la durée des cycles opératoires.

On observera que, dès la réduction de puissance du brûleur, le four se refroidit du fait des pertes thermiques vers l'extérieur du four. L'intérieur du four se met donc en dépression, toute sortie de gaz est supprimée, sauf au maximum le départ d'une faible quantité de gaz correspondant au volume de produit solide à vitrifier.

La quantité de produit à vitrifier qui est introduite lors d'une opération dépend de la nature de ce produit, et des caractéristiques du four, la capacité calorifique et la conductivité thermique de la matière des parois du four, ainsi que son isolation vers l'extérieur. Il existe une quantité optimale, qui peut être déterminée par des essais en tenant compte des points suivants : une quantité plus faible entraîne un nombre excessif d'opérations unitaires, et une quantité plus forte oblige à un temps de chauffage trop important et augmente l'amplitude des cycles thermiques subis par le four, ou bien n'amène pas la totalité des produits à entrer dans une phase vitreuse satisfaisante.

De préférence, on utilise un four rotatif, typiquement de forme générale cylindrique ou cylindro-conique, qu'on fait tourner sur lui-même avec son axe maintenu non vertical pendant la formation de la masse liquide ou pâteuse.

De cette façon, la masse vitreuse en formation balaye les parois latérales du four, et absorbe les poussières qui peuvent y séjourner. On évite ainsi une accumulation de ces poussières, qui pourraient être mises en mouvement dans la suite.

Avantageusement, on maintient l'axe de rotation du four horizontal pendant la formation de la masse liquide ou pâteuse, et on incline ledit axe pour l'évacuation de la masse liquide ou pâteuse.

Le moyen de chauffage est avantageusement un brûleur. Les avantages de faible consommation d'énergie et de coût d'investissement de cette technique sont conservés par le procédé de l'invention, et son inconvénient concernant la pollution est très fortement réduit par le procédé de l'invention. De préférence, on utilise un oxybrûleur alimenté avec de l'air enrichi en oxygène, et, de façon encore plus préférée, on utilise un brûleur alimenté avec de l'oxygène "pur", c'est-à-dire un mélange gazeux contenant au moins 90% d'oxygène. De tels brûleurs présentent divers avantages par rapport aux brûleurs classiques alimentés avec de l'air et un combustible liquide ou solide. Le rendement énergétique est meilleur. Le volume de gaz produit est diminué, ce qui réduit l'importance des installations annexes, telles que la cheminée. En outre, la réduction du volume gazeux produit limite l'entraînement de poussières de produit à vitrifier qui auraient pu rester accrochées aux parois du four.

Avantageusement, on utilise comme combustible pour le brûleur un gaz ou liquide qui n'entraîne aucune formation de poussières susceptibles de polluer l'environnement.

Avantageusement, pour diminuer le temps de chauffage dans le four, et réduire l'amplitude de cycles thermiques, et donc la fatigue du four, on procède à un préchauffage du produit hors du four avant de l'introduire dans celui-ci. Pour une meilleure utilisation de l'énergie, il est préférable de récupérer au moins une partie de la chaleur de la masse vitreuse ou des gaz sortant du four pour le préchauffage hors du four du produit à traiter.

L'invention va maintenant être exposée de façon plus détaillée à l'aide d'un exemple pratique, non limititatif illustré par les dessins sur lesquels :
La Figure 1 est un diagramme de températures montrant les différentes phases d'un procédé selon l'invention.
La Figure 2 est un schéma simplifié d'une installation utilisée selon l'invention : et
La Figure 3 est une vue du four de l'installation de la Figure 2.

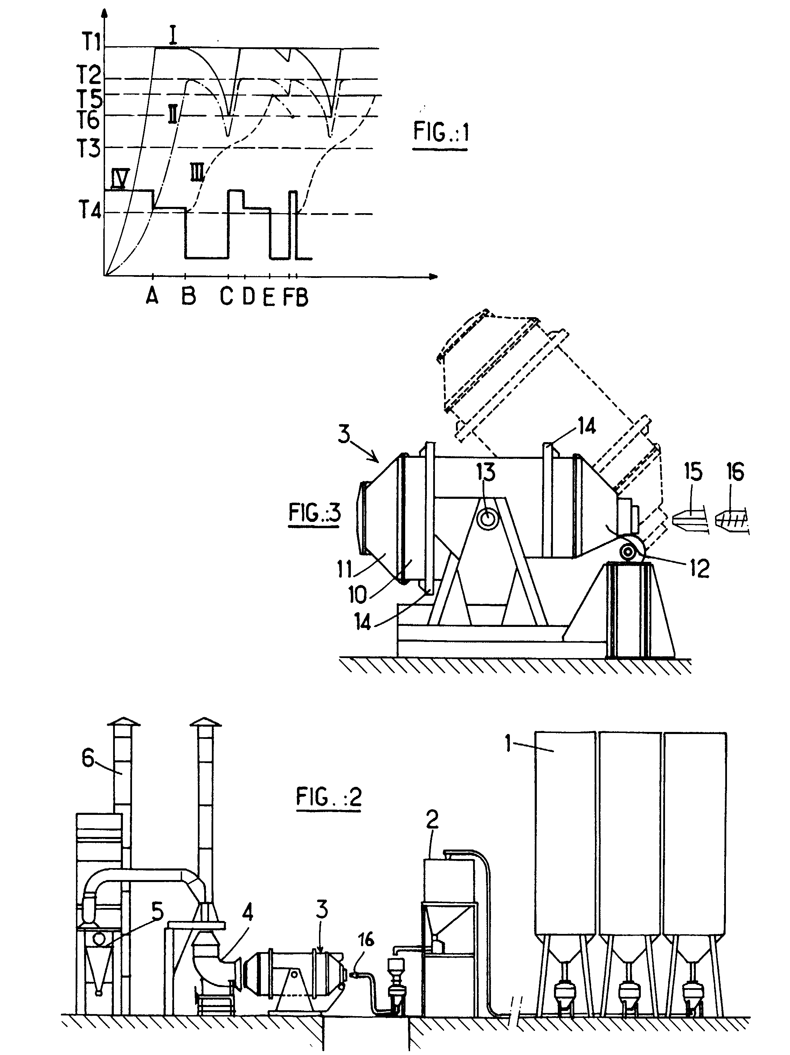

A la Figure 1, la courbe I représente l'évolution de la température de flamme du brûleur de four, la courbe II représente l'évolution de la température superficielle de la paroi interne du four, la courbe III représente l'évolution de la température d'une charge dans le four, et on a représenté en IV l'évolution de la puissance du brûleur. A partir de l'origine, qui correspond au début d'une série d'essais, on allume le brûleur, en lui donnant la puissance maximale, jusqu'à ce que la flamme atteigne une température maximale T1, qui ne doit pas être dépassée, pour ne pas endommager le four. A partir de ce moment, qui correspond au point A, la puissance du brûleur est légèrement réduite, de façon à maintenir une température de flamme à peu près constante. Pendant ce temps, la température de la paroi interne du four, représentée par la courbe II, continue de monter jusqu'à une température T2, qui est la température maximale de paroi, à ne pas dépasser. Cette température est atteinte au moment B. On fait alors passer le brûleur à puissance très réduite, c'est-à-dire à puissance de ralenti, et, immédiatement après, on introduit les produit à traiter et les complexes vitreux, lesquels ont été préalablement préchauffés à une température T4, largement inférieure, bien entendu, à la température T2. Les produits s'échauffent alors pendant que la paroi du four se refroidit, à la fois par transmission directe et par rayonnement. Au moment C, les produits ont atteint une température, où ils sont entièrement sous une forme pâteuse, et le risque de départ de poussières à pratiquement disparu. A ce moment, on réactive le brûleur à pleine puissance, et la température de la paroi remonte rapidement jusque sensiblement à la température T2, cependant que la température de flamme atteint rapidement la température T1. A ce moment D, on limite de nouveau légèrement la puissance du brûleur, ce qui fait plafonner également à la température T2 la température de la paroi, cependant que les produits continuent de s'échauffer jusqu'à une température, où ils sont suffisamment liquides pour être évacués au dehors. A ce moment E, on ramène le brûleur au ralenti et on évacue les produits fondus. Ceux-ci se refroidissent pendant l'évacuation, et la paroi du four se refroidit également jusqu'à une température T6. Lorsque l'évacuation est terminée, au moment F, on remet en puissance le brûleur jusqu'à ce que la paroi interne du four atteigne la température T2, en vue de l'introduction d'une nouvelle charge. On se retrouve, en effet, alors dans les conditions décrites au moment B, et le cycle peut recommencer avec une nouvelle charge de produits à traiter.

La figure 2 montre, de façon schématique, un ensemble d'une installation selon l'invention.

Des silos 1 permettent le stockage des produits à traiter, et, éventuellement, des additifs permettant d'abaisser leur point de fusion ou de ramollissement.

La référence 2 désigne une installation de dosage et mélange. Sous la référence 3, on a désigné un four, qui sera décrit plus loin. La référence 4 correspond à un conduit d'évacuation des fumées, qui amène les gaz à un cyclone de dépoussiérage 5, associé à une cheminée 6.

Le four 3 représenté sur la Figure 3 comprend une partie centrale cylindrique 10, et deux extrémités tronconiques 11-12. Le four est supporté par des pivots horizontaux 13, orthogonaux à l'axe du four, si bien que celui-ci peut basculer entre une position où son axe est horizontal, jusqu'à une position où son axe est incliné à environ 45° sur l'horizontale. Des chemins de roulement 14 entourent la partie centrale du four au voisinage de ses extrémités. Par coopération avec des galets d'entraînement, non représentés, ils permettent d'entraîner le four 3 en rotation sur son axe. La rotation du four permet un excellent échange de chaleur entre la charge et les parois du four.

En position horizontale, une des extrémités 11 du four est connectée au conduit 4 d'évacuation des fumées représenté à la figure 2. L'autre extrémité 12 du four peut recevoir soit un brûleur à gaz et oxygène 15, soit un dispositif de chargement, tel que par exemple un chargeur à vis sans fin 16, calculé pour introduire la charge dans le four. Le brûleur 15, comme le dispositif d'alimentation 16, sont mobiles, de façon à pouvoir être introduits dans l'extrémité 12, ou en être écartés. En pointillés, on a représenté la position du four lors du vidage du produit qui a été transformé en une masse liquide. Dans cette position, bien entendu, le brûleur 15 et le dispositif d'alimentation 16 sont retirés.

## Revendications

1. Procédé de vitrification de produits sous forme de morceaux ou particules solides, dans un four (3) équipé d'un moyen de chauffage (15), où on introduit dans le four les produits à vitrifier, on laisse les produits s'échauffer dans le four jusqu'à formation d'une masse vitreuse liquide ou pâteuse, puis on évacue cette masse vitreuse hors du four et on la laisse refroidir, caractérisé en ce qu'il comprend les étapes de préchauffer les parois intérieures du four à l'aide du moyen de chauffage jusqu'à une température dépassant la température où les produits à vitrifier peuvent former une masse vitreuse pâteuse, de réduire substantiellement l'énergie fournie par le moyen de chauffage avant d'introduire les déchets dans le four, et de laisser le produit s'échauffer principalement en recevant de la chaleur transmise par les parois internes du four jusqu'à ce que l'ensemble du produit soit sous forme de masse au moins pâteuse, le moyen de chauffage étant maintenu à puissance réduite au moins jusqu'à ce moment.

2. Procédé selon la revendication 1, caractérisé en ce qu'on réduit la puissance du moyen de chauffage au moins à une valeur de ralenti, avant d'introduire les produits dans le four.

3. Procédé selon l'une des revendications 1 et 2, caractérisé en ce qu'on règle la puissance du moyen de chauffage pour que la surface interne de la paroi du four ne dépasse pas une température limite de paroi (T2).

4. Procédé selon l'une des revendications 1 à 3, caractérisé en ce que, lorsque l'ensemble des produits a atteint la forme d'une masse pâteuse, on augmente à nouveau la puissance du moyen de chauffage jusqu'à ce que les produits soient assez fluides pour permettre leur évacuation facile.

5. Procédé selon l'une des revendications 1 à 4, caractérisé en ce qu'on utilise un four rotatif ayant un axe, qu'on fait tourner sur lui-même avec son axe maintenu non-vertical pendant la formation de la masse vitreuse.

6. Procédé selon la revendication 6, caractérisé en ce qu'on maintient l'axe de rotation du four horizontal pendant la formation de la masse liquide ou pâteuse, et on incline ledit axe pour l'évacuation de la masse liquide ou pâteuse.

7. Procédé selon l'une des revendications 1 à 6, caractérisé en ce que le moyen de chauffage est un oxybrûleur (15) dont la flamme est produite à l'intérieur du four et qui est alimenté avec un mélange gazeux enrichi à plus de 90% d'oxygène.

## Patentansprüche

1. Verfahren zur Verglasung von Produkten in Form von stückigen oder partikelförmigen Feststoffen in einem Ofen (3) mit einer Heizeinrichtung (15), bei dem man die zu verglasenden Produkte in den Ofen einträgt, die Produkte im Ofen erhitzt, bis sich eine flüssige oder zähflüssige glasartige Masse bildet, die glasartige Masse aus dem Ofen austrägt und abkühlen läßt, dadurch gekennzeichnet, daß man die Innenwände des Ofens mit Hilfe der Heizeinrichtung auf eine Temperatur vorheizt, die die Temperatur übersteigt, bei der die zu verglasenden Produkte zur Bildung einer zähflüssigen glasartigen Masse in der Lage sind, die von der Heizeinrichtung zugeführte Energie vor dem Eintragen von Abfällen in den Ofen wesentlich verringert und das Produkt hauptsächlich durch Aufnahme von Wärme, die von den Innenwänden des Ofens abgestrahlt wird, erhitzt, bis das gesamte Produkt in Form einer zumindest zähflüssigen Masse vorliegt, wobei man die Heizeinrichtung zumindest bis zu diesem Zeitpunkt bei verminderter Leistung hält.

2. Verfahren nach Anspruch 1, dadurch gekennzeichnet, daß man die Leistung der Heizeinrichtung vor dem Eintragen der Produkte in den Ofen zumindest auf einen Teillastwert herabsetzt.

3. Verfahren nach Anspruch 1 oder 2, dadurch gekennzeichnet, daß man die Leistung der Heizeinrichtung so einstellt, daß die Innenfläche der Ofenwand eine Wandgrenztemperatur (T2) nicht überschreitet.

4. Verfahren nach einem der Ansprüche 1 bis 3, dadurch gekennzeichnet, daß man dann, wenn die gesamten Produkte in Form einer zähflüssigen Masse vorliegen, die Leistung der Heizeinrichtung wieder erhöht, bis die Produkte dünnflüssig genug sind, um leicht ausgetragen werden zu können.

5. Verfahren nach einem der Ansprüche 1 bis 4, dadurch gekennzeichnet, daß man einen Drehofen mit einer Achse verwendet, den man so um sich selbst dreht, daß seine Achse während der Bildung der glasartigen Masse nichtvertikal gehalten wird.

6. Verfahren nach Anspruch 6, dadurch gekennzeichnet, daß man die Drehachse des Ofens während der Bildung der flüssigen oder zähflüssigen Masse horizontal hält und die Achse zum Austragen der flüssigen oder zähflüssigen Masse neigt.

7. Verfahren nach einem der Ansprüche 1 bis 6, dadurch gekennzeichnet, daß man als Heizeinrichtung einen Sauerstoffbrenner (15) einsetzt, dessen Flamme im Ofeninneren erzeugt wird und der mit einem auf einen Sauerstoffgehalt von mehr als 90% angereicherten Gasgemisch gespeist wird.

## Claims

1. Process for the vitrification of products in the form of solid pieces or particles, in a furnace (3) equipped with a heating means (15), in which process the products to be vitrified are introduced into the furnace, the products are left to be heated in the furnace until the formation of a liquid or pasty vitreous mass, and then this vitreous mass is removed from the furnace and left to cool, characterized in that it comprises the steps of preheating the internal walls of the furnace with the aid of the heating means up to a temperature exceeding the temperature at which the products to be vitrified can form a pasty vitreous mass, of substantially reducing the energy supplied by the heating means before the waste is introduced into the furnace, and of leaving the product to be heated mainly by receiving heat transmitted via the internal walls of the furnace until all of the product is in the form of an at least pasty mass, the heating means being maintained at reduced power at least until this moment.

2. Process according to Claim 1, characterized in that the power of the heating means is reduced, at least to an idle value, before the products are introduced into the furnace.

3. Process according to either of Claims 1 and 2, characterized in that the power of the heating means is adjusted so that the internal surface of the wall of the furnace does not exceed a limiting wall temperature (T2).

4. Process according to one of Claims 1 to 3, characterized in that, when all of the products have attained the form of a pasty mass, the power of the heating means is increased again until the products are fluid enough to allow them to be easily removed.

5. Process according to one of Claims 1 to 4, characterized in that a rotary furnace having an axis is used, which is made to rotate on itself with its axis kept non-vertical during the formation of the vitreous mass.

6. Process according to Claim 5, characterized in that the axis of rotation of the furnace is kept horizontal during the formation of the liquid or pasty mass, and the said axis is inclined in order to remove the liquid or pasty mass.

7. Process according to one of Claims 1 to 6, characterized in that the heating means is an oxyburner (15), the flame of which is produced inside the furnace, and the oxyburner is supplied with a gas mixture enriched to more than 90% with oxygen.
